# EUROPÄISCHE PATENTSCHRIFT

(11) **EP 3 626 948 B1**
(45) Veröffentlichungstag und Bekanntmachung des Hinweises auf die Patenterteilung: **16.06.2021**
(21) Anmeldenummer: 18465572.8
(22) Anmeldetag: 18.09.2018
(51) Int. Cl.: F02D 9/04, F16K 1/12, F16K 1/38, F16K 1/44, F16K 25/00, F16K 11/04, F02M 26/66, F02M 26/69

(54) **VENTIL SOWIE VERFAHREN ZUM HERSTELLEN EINES VENTILS**
VALVE AND METHOD FOR PRODUCING A VALVE
SOUPAPE AINSI QUE PROCÉDÉ DE FABRICATION D'UNE SOUPAPE

(43) Veröffentlichungstag der Anmeldung: 25.03.2020
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- EP-A1- 1 798 456
- WO-A1-2017/137961
- WO-A1-2018/140998
- DE-A1-102015 122 379
- DE-C1- 19 539 921
- TW-B- I 635 224
- US-A- 4 254 792
- US-A1- 2003 098 074
- US-A1- 2005 279 956
- US-A1- 2017 356 440

## Beschreibung

Die Erfindung betrifft ein Ventil zum Öffnen und Schließen von Abgasleitungen. Ein solches Ventil weist ein Gehäuse und einen darin angeordneten Stößel auf, der mit einem Antrieb koppelbar ist und ausgebildet ist mittels des Antriebs entlang einer Längsachse des Stößels bewegt zu werden. Im Gehäuse ist ein Ventilsitz angeordnet, der eine Ventilöffnung begrenzt und die mittels einer am Stößel angeordneten Ventilkörpervorrichtung abdichtend geschlossen bzw. freigegeben werden kann.

Solche Ventile werden zum Öffnen und Verschließen von Abgasleitungen in Kraftfahrzeugen eingesetzt und sind aus dem Stand der Technik bekannt. Wichtig für die Funktion solcher Ventile ist die Dichtheit, mit der das Ventil die Leitung verschließt. Gerade bei Gasen ist das Erreichen einer geringen Leckrate mit hohem Aufwand verbunden. Beispielsweise ist entscheidend, die Position der Ventilkörpervorrichtung zu bestimmen, um so das Öffnen und Schließen des Ventils regeln zu können. Der Antrieb des Stößels wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel die Ventilkörpervorrichtung linear bewegen kann.

Die DE 10 2015 122379 A1 betrifft eine Ventilvorrichtung für eine Verbrennungskraftmaschine. Die US 4 254 792 A bezieht sich auf ein Doppelsitzventil mit zwei Ventilscheiben, die sich unabhängig voneinander und relativ zueinander bewegen. Die US 2005/279956 A1 betrifft ein Ventil, das insbesondere für gasförmige, flüssige Medien vorgesehen ist. Die WO 2018/140998 A1 betrifft eine Ventilanordnung für ein Saugmittel und eine Geruchsabsaugvorrichtung für eine Toilette. Die WO 2017/137961 A1 betrifft eine elektrische Ventilvorrichtung, die insbesondere in Haushaltsgeräten wie Waschmaschinen oder Geschirrspülern verwendet wird. Die EP 1 798 456 A1 bezieht sich auf ein Absperrventil, das für den Einsatz in einem gasbefeuerten Kessel, einer Gasverbrennungsvorrichtung oder dergleichen geeignet ist.

Eine Aufgabe, die der Erfindung zugrunde liegt, ist es, ein Konzept für ein Ventil anzugeben, welches eine besonders hohe Dichtheit des Ventils im Betrieb ermöglicht.

Die Aufgabe wird gelöst durch die Gegenstände der unabhängigen Ansprüche.

Erfindungsgemäß bzw. gemäß einem ersten Aspekt wird ein gattungsgemäßes Ventil offenbart, welches als Ventilkörpervorrichtung einen ersten und einen zweiten Ventilkörper aufweist, die jeweils mit dem Stößel verbunden sind, so dass die beiden Ventilkörper durch eine Bewegung des Stößels zwischen einer Offenstellung, in der die Ventilöffnung freigegeben ist, und einer Schließstellung, in der die beiden Ventilkörper an dem Ventilsitz anliegen und jeweils die Ventilöffnung abdichtend verschließen, verstellbar sind. Die beiden Ventilkörper weisen jeweils einen zylindrischen Abschnitt auf, mittels welchem diese auf den Stößel aufgeschoben und/oder aufgepresst sind. Der erste Ventilkörper weist einen abstehenden Schenkel auf, der ringförmig um die Längsachse umläuft und der sich unter einem Winkel bezüglich der Längsachse weg von dem Ventilsitz erstreckt. Der zweite Ventilkörper weist einen abstehenden Schenkel auf, der ringförmig um die Längsachse umläuft und der sich unter einem Winkel bezüglich der Längsachse hin zu dem Ventilsitz erstreckt. Die beiden Ventilkörper sind benachbart zueinander angeordnet. Der erste Ventilkörper ist bezogen auf die Längsachse näher am Ventilsitz angeordnet als der zweite Ventilkörper. Der zweite Ventilkörper erstreckt sich zumindest teilweise über den ersten Ventilkörper mit dessen Schenkel hinweg. Beide Schenkel sind federnd ausgebildet. Der erste Ventilkörper weist einen ersten Kontaktbereich auf, der in der Schließstellung an dem Ventilsitz anliegt zur Ausbildung einer ersten Dichtung. Der erste Kontaktbereich ist an dem Schenkel des ersten Ventilkörpers ausgebildet. Der zweite Ventilkörper weist einen zweiten Kontaktbereich auf, der an dem Schenkel des zweiten Ventilkörpers ausgebildet ist und der in der Schließstellung an dem Ventilsitz anliegt zur Ausbildung einer zweiten Dichtung, so dass die Ventilöffnung in der Schließstellung sowohl durch den ersten Ventilkörper als auch durch zweiten Ventilkörper abdichtbar ist.

Das beschriebene Ventil zeichnet sich dadurch aus, dass zwei Ventilkörper am Stößel angeordnet sind, die in Schließstellung ein und dieselbe Ventilöffnung abdichten. Hierzu sind die beiden Ventilkörper aufgrund ihrer festen Kopplung mit dem Stößel simultan mittels des Stößels bewegbar und so ausgebildet, dass diese in der Schließstellung jeweils separat an dem gemeinsamen Ventilsitz anliegen.

Die beiden Ventilkörper sind beispielsweise unmittelbar benachbart am Stößel bezogen auf die Längsachse angeordnet. Dadurch sind an einem Ventilsitz zwei Ventildichtungen bzw. zwei Ventilfunktionen ermöglicht. Dies ermöglicht eine besonders effektive Dichtheit des Ventils, da durch die beiden Ventilkörper für eine Ventilöffnung eine Redundanz ermöglicht ist und im Falle einer Leckage bei einem Ventilkörper immer noch die Dichtheit des Ventils über den andern Ventilkörper erzielt werden kann. Des Weiteren kann beispielsweise auf einen zusätzlichen Ventilsitz verzichtet und damit Kosten eingespart werden. Es wird zudem zu einer kostengünstigen Herstellung eines solchen Ventils beigetragen.

Das beschriebene Ventil eignet sich insbesondere für Linearventile, bei denen der Stößel entlang einer Richtung, insbesondere seiner Längsachse, linear bewegt wird. Weiterhin kann das Ventil auch einen weiteren Ventilsitz mit einer weiteren Ventilöffnung aufweisen (Doppellinearventil), die gleichzeitig zur ersten Ventilöffnung durch die Stößelbewegung mittels einer entsprechenden Ventilkörpervorrichtung verschlossen oder freigegeben werden kann. Diese Ventilkörpervorrichtung kann wiederum zwei Ventilkörper für den einen weiteren Ventilsitz aufweisen, es ist aber auch ein einzelner Ventilkörper unter Ausbildung einer Dichtung vorstellbar.

Beispielsweise ist das Ventil in einem Abgasrückführsystem eines Kraftfahrzeugs einsetzbar, um die Abgasleitung des Kraftfahrzeugs zu öffnen und zu schließen. Beispielsweise weist ein Abgasrückführsystem eines Kraftfahrzeugs das Ventil auf.

Als Ventilsitz wird bevorzugt ein einstückiges Bauteil verstanden, welches im Gehäuse angeordnet ist, etwa eingepresst, und den Dichtkontakt mit den Ventilkörpern herstellt. Es kann sich alternativ auch um einen Abschnitt des Gehäuses handeln, der die Ventilöffnung begrenzt.

Gemäß einer Ausführungsform sind einer oder beide Ventilkörper tellerartig ausgebildet. Beispielsweise handelt es sich um einen inneren tellerartigen und einen äußeren tellerartigen Ventilkörper, wobei der äußere Ventilkörper den inneren in radialer Richtung bezogen auf die Längsachse des Stößels überragt. Dadurch können beide Ventilkörper die Ventilöffnung wirksam abdichten. Die tellerartige Ausgestaltung ermöglicht zudem eine einfache und kostengünstige Herstellung.

Gemäß einer Ausführungsform sind der erste Ventilkörper und/oder der zweite Ventilkörper mit dem Stößel verschweißt. Dies ermöglicht eine sichere und langzeitstabile Verbindung. Zudem ist eine einfache und kostengünstige Herstellung ermöglicht.

Gemäß einer Ausführungsform sind der erste Ventilkörper und/oder der zweite Ventilkörper als Halbzeug gestanzt und in ihre endgültige Form umgeformt. Das Umformen umfasst beispielsweise einen Biegeherstellungsprozess. Dies trägt zu einer besonders kostengünstigen Herstellung bei, die einen besonders geringen Stückpreis ermöglicht. Weiterhin ist ein derartiger Ventilköper aufgrund der Ausgestaltung als gestanztes und umgeformtes Teil mit einer vorbestimmten Grundelastizität ausgestattet, wodurch Toleranzen mithilfe von einer Vorspannung ausgeglichen werden können und eine besonders gute Dichtheit erzielbar ist. Die Ventilkörper sind beispielsweise aus Blech, etwa Federblech, hergestellt.

Erfindungsgemäß weist der erste Ventilkörper einen ersten Kontaktbereich auf, der in der Schließstellung an dem Ventilsitz anliegt zur Ausbildung einer ersten Dichtung, und wobei der zweite Ventilkörper einen zweiten Kontaktbereich aufweist, der in der Schließstellung an dem Ventilsitz anliegt zur Ausbildung einer zweiten Dichtung, so dass die Ventilöffnung in der Schließstellung sowohl durch den ersten Ventilkörper als auch durch den zweiten Ventilkörper abdichtbar ist. Dies ermöglicht die oben genannten Vorteile und Funktionen. Insbesondere bildet jeder Ventilkörper in der Schließstellung einen eigenen Kontaktbereich aus, der jeweils mit einem entsprechenden Gegenkontaktbereich des Ventilsitzes in der Schließstellung in Kontakt tritt.

Die Kontaktbereiche sind beispielsweise um die Längsachse des Stößels herum umlaufend ausgebildet. Beispielsweise sind die Kontaktbereich ringförmig oder zylinderförmig vollständig um die Längsachse umlaufend. Die beiden Ventilkörper sind beispielswiese rotationssymmetrisch ausgebildet. Die beiden Kontaktbereiche können auch als Dichtflächen oder Dichtbereiche bezeichnet werden. Die Kontaktbereiche sind beispielsweise tellerartig oder scheibenartig ausgebildet.

Erfindungsgemäß ist der erste Kontaktbereich an einem Schenkel des ersten Ventilkörpers ausgebildet, wobei sich der Schenkel des ersten Ventilkörpers in einer Richtung weg von dem Ventilsitz erstreckt. Zusätzlich oder alternativ ist der zweite Kontaktbereich an einem Schenkel des zweiten Ventilkörpers ausgebildet, wobei sich der Schenkel des zweiten Ventilkörpers in einer Richtung hin zu dem Ventilsitz erstreckt. Dies ermöglicht die oben genannten Vorteile und Funktionen.

Die Schenkel sind bevorzugt ringförmig um die Längsachse des Stößels umlaufend ausgebildet. Die Schenkel des ersten beziehungsweise zweiten Ventilkörpers erstrecken sich entsprechend unter einem vorbestimmten Winkel bezüglich der Längsachse des Stößels zum Ventilsitz hin oder von diesem weg. Ein Schenkel kann auch als freier Endabschnitt oder Kontaktabschnitt des jeweiligen Ventilkörpers gesehen werden.

Erfindungsgemäß sind die Schenkel des ersten Ventilkörpers und die des zweiten Ventilkörpers federnd ausgebildet. Dadurch wird - wie bereits oben erwähnt - dazu beigetragen Toleranzen auszugleichen und eine besonders wirksame Dichtheit zu erzielen. Auch wird eine effektive Montage, wie später noch beschrieben wird, ermöglicht.

Gemäß einer Ausführungsform ist der erste Ventilkörper bezogen auf den Stößel näher an dem Ventilsitz angeordnet als der zweite Ventilkörper, und zumindest der federnde Schenkel des ersten Ventilkörpers ist in der Schließstellung elastisch verformt. Mittels eines derartigen Schenkels wird eine besonders wirksame Abdichtung des Ventilsitzes ermöglicht, indem beispielsweise der Schenkel unter Vorspannung in der Schließstellung am Ventilsitz anliegt. Der Schenkel wird beispielsweise in einer Richtung weg von dem Ventilsitz elastisch gebogen. Dadurch wirkt eine Federkraft auf den Ventilsitz, wodurch - wie bereits oben erwähnt - Toleranzen ausgeglichen werden können.

Erfindungsgemäß bzw. gemäß einem weiteren Aspekt wird ein Verfahren zum Herstellen eines Ventils nach einer der zuvor beschriebenen Ausführungsformen offenbart, welches die folgenden Schritte umfasst:
- Festlegen eines ersten Ventilkörpers an dem Stößel, wobei der erste Ventilkörper zum Schließen bzw. Freigeben einer Ventilöffnung des Ventils ausgebildet ist,
- Einsetzen des Stößels in einem Gehäuse des Ventils,
- Bewegen des Stößels entlang der Längsachse in die Schließstellung derart, dass der erste Ventilkörper an einem Ventilsitz zum Schließen der Ventilöffnung abdichtend anliegt, und
- Festlegen eines zweiten Ventilkörpers an dem Stößel nach dem Bewegen des Stößels in die Schließstellung, so dass der zweite Ventilkörper an dem Ventilsitz anliegt.

Das beschriebene Verfahren ermöglicht die Herstellung eines Ventils mit den oben erwähnten Vorteilen und Funktionen. Bei dem Verfahren werden nicht beide Ventilkörper gleichzeitig am Stößel montiert, sondern der Stößel und der montierte erste Ventilkörper werden als Einheit in das Gehäuse eingesetzt, ehe anschließend der zweite Ventilkörper montiert wird.

Soweit nicht anders angegeben gelten die obigen Ausführungen zu dem Ventil und Weiterbildungen dessen analog auch für das Verfahren.

Gemäß einer Ausführungsform wird im Schritt des Bewegens eine Kraft auf den Stößel aufgebracht, die den ersten Ventilkörper gegen den Ventilsitz drückt. Somit wird der zweite Ventilkörper erst montiert, wenn der erste Ventilkörper in der Schließstellung sicher abdichtend am Ventilsitz anliegt. Dadurch ist ermöglicht, dass der zweite Ventilkörper so montiert wird, dass dieser in der Schließstellung ebenfalls sicher abdichtend am Ventilsitz anliegt. Dies stellt sicher, dass beide Dichtfunktionen in der Schließstellung wirksam sind. Die Kraft wird beispielsweise durch eine Feder aufgebracht, die im oder am Gehäuse gelagert ist, auf den Stößel wirkt und diesen in Richtung des Ventilsitzes zieht.

Gemäß einer Ausführungsform liegt in der Schließstellung der erste Ventilkörper mit einem federnden Schenkel dichtend an dem Ventilsitz und eine Kraft ist derart auf den ersten Ventilkörper aufgebracht, dass der federnde Schenkel elastisch verformt ist. Dadurch werden die obigen Vorteile und Funktionen ermöglicht.

Weitere Vorteile, Merkmale und Weiterbildungen ergeben sich aus der nachfolgenden, in Verbindung mit den Figuren erläuterten Beschreibung eines Ausführungsbeispiels. Gleiche, gleichartige oder gleichwirkende Elemente können in den Figuren mit den gleichen Bezugszeichen versehen sein.

In den Figuren zeigen:
- Figur 1: eine schematische Schnittansicht eines exemplarischen Ventils,
- Figur 2: eine schematische, perspektivische Ansicht eines Ventils gemäß einem Ausführungsbeispiel der Erfindung,
- Figur 3: eine schematische Schnittansicht des Ventils gemäß Figur 2 in einer Offenstellung,
- Figur 4: eine schematische Schnittansicht des Ventils gemäß Figur 2 in einer Schließstellung, und
- Figur 5: ein schematisches Ablaufdiagramm eines Verfahrens zum Herstellen eines Ventils gemäß Figur 2.

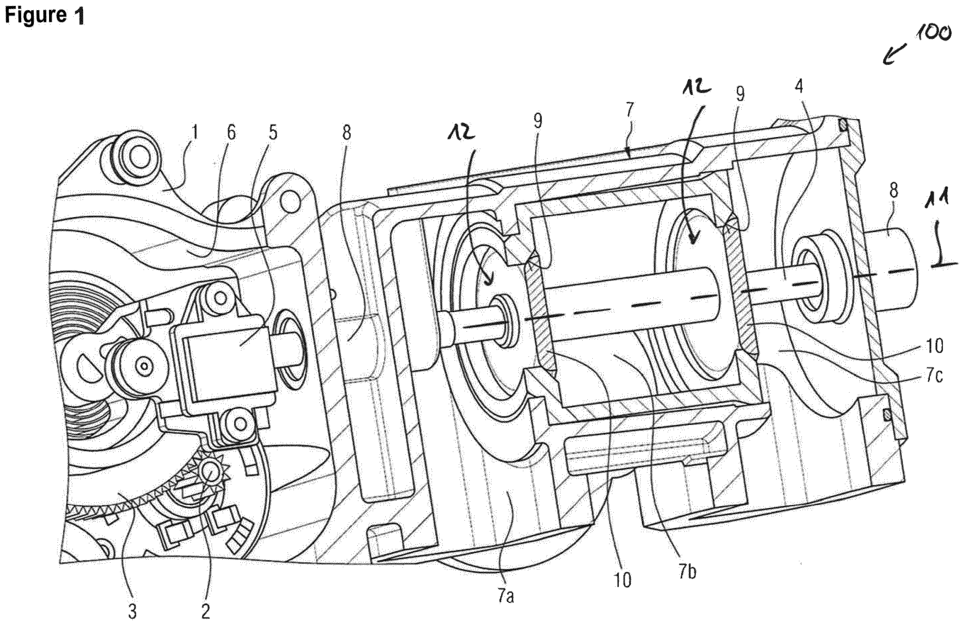

Das exemplarische Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4 umgewandelt. Am Getriebe 3 ist ein Sensor 5 angeordnet, der mit einem am Stößel 4 befestigten Magneten zusammenwirkt. Der Stößel 4 erstreckt sich von der Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Ventilkörper 10 sind so auf dem Stößel 4 angeordnet, dass sie sich bei einer linearen Bewegung des Stößels 4 entlang einer Längsachse 11 des Stößels 4 an den jeweiligen Ventilsitz 9 anlegen und eine entsprechende Ventilöffnung 12 abdichten oder sich vom Ventilsitz 9 wegbewegen und die entsprechende Ventilöffnung 12 somit freigeben, so dass ein Gas von einer Ventilkammer 7 in die andere strömen kann.

Im Folgenden wird ein Ventil 100 gemäß einem Ausführungsbeispiel der Erfindung beschrieben, welches eine verbesserte Abdichtung einer Ventilöffnung 12 aufweist. Im Übrigen kann das Ventil 100 die Merkmale der anhand von Figur 1 beschriebenen Ausgestaltung aufweisen. Es sei jedoch darauf hingewiesen, dass das in Figur 1 beschriebene Ventil 100 exemplarisch zu verstehen ist und alternativ auch anderweitige Ausgestaltungen haben kann.

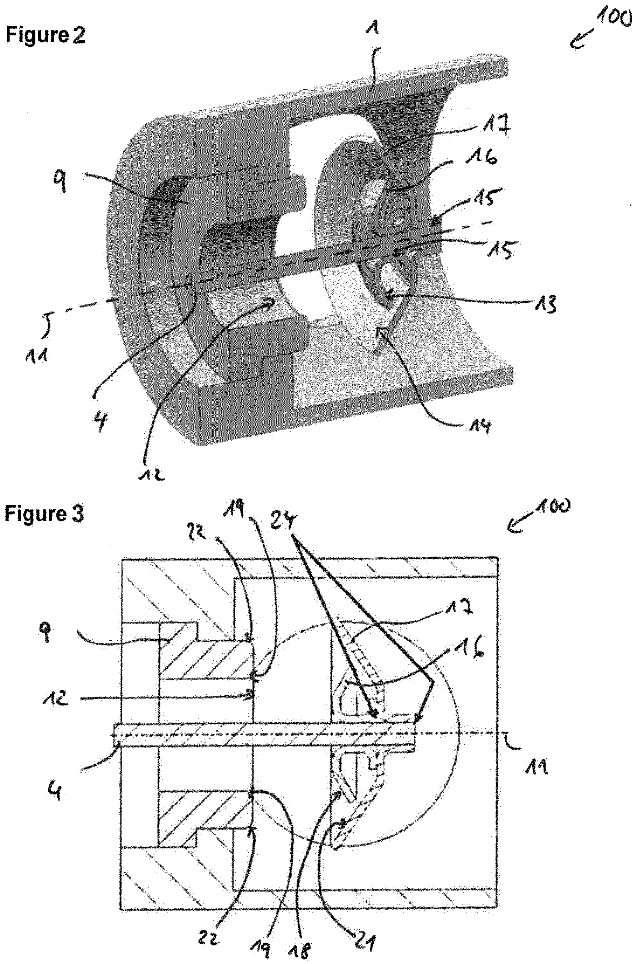

Figur 2 zeigt einen perspektivischen Ausschnitt des Ventils 100. Dargestellt ist ein Ventilsitz 9, der eine Ventilöffnung 12 begrenzt. Der Ventilsitz 9 ist beispielsweise fest in das Gehäuse 1 eingepresst. An dem Stößel 4 sind zwei tellerartige Ventilkörper 13 und 14 angeordnet. Die beiden Ventilkörper 13 und 14 sind in einem Stanz- und Umformprozess aus Blech, insbesondere Federblech, hergestellt. Die beiden Ventilkörper 13 und 14 sind ringförmig um die Längsachse 11 des Stößels 4 umlaufend ausgebildet und haben jeweils einen zylindrischen Abschnitt 15, mittels welchem diese auf den Stößel 4 aufgeschoben und/oder aufgepresst sind. Die beiden Ventilkörper 13 und 14 sind fest mit dem Stößel 4 verschweißt. In Figur 3 sind Verschweißungen 24 der beiden Ventilkörper 13, 14 mit dem Stößel 4 exemplarisch gekennzeichnet.

Der erste Ventilkörper 13 hat einen abstehenden Schenkel 16, der um die Längsachse 11 umläuft. Der Schenkel 16 erstreckt sich unter einem Winkel bezüglich der Längsachse 11 weg von dem Ventilsitz 9. Der zweite Ventilkörper 14 hat einen abstehenden Schenkel 17, der um die Längsachse 11 umläuft. Der Schenkel 17 erstreckt sich unter einem Winkel bezüglich der Längsachse 11 hin zu dem Ventilsitz 9. Die beiden Ventilkörper 13 und 14 sind benachbart zueinander angeordnet, wobei der zweite Ventilkörper 14 sich zumindest teilweise über den ersten Ventilkörper 13, insbesondere mit dessen Schenkel 17, hinweg erstreckt. Der erste Ventilkörper 13 ist bezogen auf die Längsachse 11 näher am Ventilsitz 9 angeordnet als der zweite Ventilkörper 14. Zumindest beide Schenkel 16 und 17 sind federnd ausgebildet.

Wie bereits anhand von Figur 1 beschrieben ist der Stößel 4 linear entlang der Längsachse 12 zwischen einer Schließstellung und einer Offenstellung bewegbar. Dabei werden die beiden Ventilkörper 13 und 14 simultan bewegt. Die beiden Ventilkörper 13 und 14 sind so angeordnet und ausgebildet, dass diese die Ventilöffnung 12 verschließen bzw. freigeben können. In Figur 2 ist die Offenstellung gezeigt, in welcher die Ventilöffnung 12 freigegeben, das heißt geöffnet, ist.

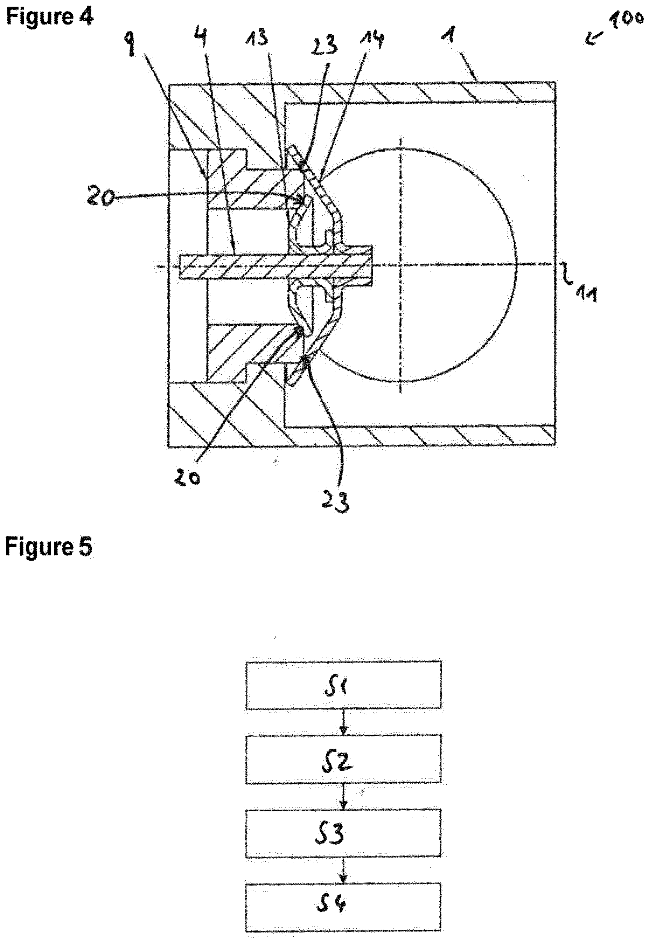

Die Funktionalität des Ventils 100 ist anhand der Figuren 3 und 4 genauer erläutert. Figur 3 zeigt eine schematische Schnittdarstellung des Ventils 100 in der Offenstellung. Figur 4 zeigt eine schematische Schnittdarstellung des Ventils 100 in der Schließstellung.

In der Schließstellung (Figur 4) liegen beide Ventilkörper 13 und 14 abdichtend an dem einen Ventilsitz 9 an. Mit anderen Worten verschließen die beiden Ventilkörper 13 und 14 die Ventilöffnung 12 gemeinsam. Der erste Ventilkörper 13 hat einen ersten Kontaktbereich 18, der in der Schließstellung mit einem entsprechenden ersten Gegenkontaktbereich 19 des Ventilsitzes 9 in Kontakt ist. Dabei ist eine erste Dichtung 20 (Ventildichtung) ausgebildet. Der zweite Ventilkörper 14 hat einen zweiten Kontaktbereich 21, der in der Schließstellung mit einem entsprechenden ersten Gegenkontaktbereich 22 des Ventilsitzes 9 in Kontakt ist. Dabei ist eine zweite Dichtung 23 (Ventildichtung) ausgebildet.

In der Schließstellung ist der erste Ventilkörper 13 derart gegen den Ventilsitz 9 vorgespannt, etwa mittels einer nicht gezeigten Feder, die auf den Stößel wirkt und am Gehäuse 1 gelagert ist, dass zumindest der Schenkel 16 des ersten Ventilkörpers 13 leicht elastisch aus seiner entspannten Position verbogen ist.

Das Ventil 100 ermöglicht die eingangs genannten Vorteile und Funktionen.

Das Ventil 100 gemäß Figuren 2 bis 4 kann einen weiteren Ventilsitz haben, der analog zu oben mittels zweier Ventilkörper abgedichtet werden kann. Es ist jedoch auch eine Kombination denkbar, bei welcher ein Ventilsitz mit zwei Ventilkörpern und einer mit einem Ventilkörper abdichtbar sind.

Anhand von Figur 5 wird ein Herstellungsverfahren für das Ventil 100 beschrieben.

Gemäß einem Schritt S1 wird der erste Ventilkörper 13 an dem Stößel 4 festgelegt, insbesondere verschweißt.

In einem nächsten Schritt S2 wird der Stößel 4 in das Gehäuse 1 des Ventils 100 eingesetzt und zumindest teilweise gelagert.

Anschließend wird der Stößel 4 in einem weiteren Schritt S3 mit einer Kraft beaufschlagt, etwa der Federkraft einer nicht gezeigten Feder (siehe Beschreibung oben). Dabei wird Stößel 4 linear entlang der Längsachse 11 in die Schließstellung bewegt, wobei durch die wirkende Kraft der Schenkel 16 an dem Ventilsitz 9 dichtend anliegt und gleichzeitig leicht elastisch verbogen wird.

In einem weiteren Schritt S4 wird - nach dem Einsetzen des Stößels 4 in das Gehäuse 1 - der zweite Ventilkörper 14 am Stößel 4 festgelegt, insbesondere verschweißt. Der zweite Ventilkörper 14 wird so angeordnet, dass dieser in der vorherrschenden Schließstellung ebenfalls dichtend an dem Ventilsitz 9 anliegt.

## Patentansprüche

1. Ventil (100) zum Öffnen und Schließen von Abgasleitungen, aufweisend
- ein Gehäuse (1),
- einen im Gehäuse (1) angeordneten Stößel (4), der mit einem Antrieb (2) koppelbar ist und ausgebildet ist mittels des Antriebs (2) entlang einer Längsachse (11) des Stößels (4) bewegt zu werden,
- einen im Gehäuse (1) angeordneten Ventilsitz (9), der eine Ventilöffnung (12) begrenzt, und
- einen ersten Ventilkörper (13) und einen zweiten Ventilkörper (14), die jeweils mit dem Stößel (4) verbunden sind, so dass die beiden Ventilkörper (13, 14) durch eine Bewegung des Stößels (4) zwischen einer Offenstellung, in der die Ventilöffnung (12) freigegeben ist, und einer Schließstellung, in der die beiden Ventilkörper (13, 14) an dem Ventilsitz (9) anliegen und jeweils die Ventilöffnung (12) abdichtend verschließen, verstellbar sind, wobei die beiden Ventilkörper (13, 14) ringförmig um die Längsachse (11) des Stößels (4) umlaufend ausgebildet sind und jeweils einen zylindrischen Abschnitt (15) aufweisen, mittels welchem diese auf den Stößel (4) aufgeschoben und/oder aufgepresst sind, der zweite Ventilkörper (14) einen abstehenden Schenkel (17) aufweist, der ringförmig um die Längsachse (11) umläuft und der sich unter einem Winkel bezüglich der Längsachse (11) hin zu dem Ventilsitz (9) erstreckt,
die beiden Ventilkörper (13, 14) benachbart zueinander angeordnet sind,
der erste Ventilkörper (13) bezogen auf die Längsachse (11) näher am Ventilsitz (9) angeordnet ist als der zweite Ventilkörper (14),
der zweite Ventilkörper (14) einen zweiten Kontaktbereich (21) aufweist, der an dem Schenkel (17) des zweiten Ventilkörpers (14) ausgebildet ist und der in der Schließstellung an dem Ventilsitz (9) anliegt zur Ausbildung einer zweiten Dichtung (23), so dass die Ventilöffnung (12) in der Schließstellung sowohl durch den ersten Ventilkörper (13) als auch durch zweiten Ventilkörper (14) abdichtbar ist, **dadurch gekennzeichnet,**
**dass** der erste Ventilkörper (13) einen abstehenden Schenkel (16) aufweist, der ringförmig um die Längsachse (11) umläuft und der sich unter einem Winkel bezüglich der Längsachse (11) weg von dem Ventilsitz (9) erstreckt und der erste Ventilkörper (13) einen ersten Kontaktbereich (18) aufweist, der an dem Schenkel (16) des ersten Ventilkörpers (13) ausgebildet ist und der in der Schließstellung an dem Ventilsitz (9) anliegt zur Ausbildung einer ersten Dichtung (20),
**dass** der zweite Ventilkörper (14) sich zumindest teilweise über den ersten Ventilkörper (13) mit dessen Schenkel (17) hinweg erstreckt und,
**dass** beide Schenkel (16, 17) federnd ausgebildet sind.

2. Ventil (100) nach Anspruch 1, wobei einer oder beide Ventilkörper (13, 14) tellerartig ausgebildet sind.

3. Ventil (100) nach Anspruch 1 oder 2, wobei der erste Ventilkörper (13) und/oder der zweite Ventilkörper (14) mit dem Stößel (4) verschweißt sind.

4. Ventil (100) nach einem der vorhergehenden Ansprüche, wobei der erste Ventilkörper (13) und/oder der zweite Ventilkörper (14) als Halbzeug gestanzt und in ihre endgültige Form umgeformt sind.

5. Ventil (100) nach einem der vorhergehenden Ansprüche, wobei der erste Ventilkörper (13) bezogen auf den Stößel (4) näher an dem Ventilsitz (9) angeordnet ist als der zweite Ventilkörper (14), und wobei zumindest der federnde Schenkel (16) des ersten Ventilkörpers (13) in der Schließstellung elastisch verformt ist.

6. Verfahren zum Herstellen eines Ventils (100) nach einem der vorhergehenden Ansprüche, umfassend die Schritte:
- Festlegen eines ersten Ventilkörpers (13) an dem Stößel (4), wobei der erste Ventilkörper (13) zum Schließen bzw. Freigeben einer Ventilöffnung (12) des Ventils (100) ausgebildet ist,
- Einsetzen des Stößels (4) in einem Gehäuse (1) des Ventils,
- Bewegen des Stößels (4) entlang der Längsachse (11) in die Schließstellung derart, dass der erste Ventilkörper (13) an einem Ventilsitz (9) zum Schließen der Ventilöffnung (12) anliegt, und
- Festlegen eines zweiten Ventilkörpers (14) an dem Stößel (4) nach dem Bewegen des Stößels (4) in die Schließstellung, so dass der zweite Ventilkörper (14) an dem Ventilsitz (9) anliegt.

7. Verfahren nach Anspruch 6, wobei im Schritt des Bewegens eine Kraft auf den Stößel (4) aufgebracht wird, die den ersten Ventilkörper (13) gegen den Ventilsitz (9) drückt.

8. Verfahren nach Anspruch 7, wobei in der Schließstellung der erste Ventilkörper (13) mit einem federnden Schenkel (16) dichtend an dem Ventilsitz (9) anliegt und wobei eine Kraft derart auf den ersten Ventilkörper (13) aufgebracht ist, dass der federnde Schenkel (16) elastisch verformt ist.

## Claims

1. Valve (100) for opening and closing exhaust-gas lines, having
- a housing (1),
- a plunger (4) which is arranged in the housing (1) and which is couplable to a drive (2) and which is designed to be moved by means of the drive (2) along a longitudinal axis (11) of the plunger (4),
- a valve seat (9) which is arranged in the housing (1) and which delimits a valve opening (12), and
- a first valve body (13) and a second valve body (14) which are each connected to the plunger (4), such that the two valve bodies (13, 14) are, by means of a movement of the plunger (4), adjustable between an open position, in which the valve opening (12) is opened up, and a closed position, in which the two valve bodies (13, 14) bear against the valve seat (9) and each sealingly close off the valve opening (12),
wherein
the two valve bodies (13, 14) are formed in ringshaped encircling fashion around the longitudinal axis (11) of the plunger (4) and each have a cylindrical section (15) by means of which they are pushed and/or pressed onto the plunger (4),
the second valve body (14) has a projecting limb (17) which runs in encircling fashion around the longitudinal axis (11) and which extends towards the valve seat (9) at an angle with respect to the longitudinal axis (11),
the two valve bodies (13, 14) are arranged adjacent to one another,
in relation to the longitudinal axis (11), the first valve body (13) is arranged closer than the second valve body (14) to the valve seat (9),
the second valve body (14) has a second contact region (21), which is formed on a limb (17) of the second valve body (14) and which in the closed position bears against the valve seat (9) so as to form a second seal (23), such that, in the closed position, the valve opening (12) can be sealed off both by the first valve body (13) and by the second valve body (14), **characterized**
**in that** the first valve body (13) has a projecting limb (16) which runs in encircling fashion around the longitudinal axis (11) and which extends away from the valve seat (9) at an angle with respect to the longitudinal axis (11) and the first valve body (13) has a first contact region (18) which is formed on the limb (16) of the first valve body (13) and which in the closed position bears against the valve seat (9) so as to form a first seal (20),
**in that** the second valve body (14) extends, by way of its limb (17), at least partially across the first valve body (13), and
**in that** the two limbs (16, 17) are of resilient form.

2. Valve (100) according to Claim 1, wherein one or both valve bodies (13, 14) are of plate-like form.

3. Valve (100) according to Claim 1 or 2, wherein the first valve body (13) and/or the second valve body (14) are welded to the plunger (4).

4. Valve (100) according to any of the preceding claims, wherein the first valve body (13) and/or the second valve body (14) are punched as semifinished parts and are deformed into their final shape.

5. Valve (100) according to any of the preceding claims, wherein, in relation to the plunger (4), the first valve body (13) is arranged closer than the second valve body (14) to the valve seat (9), and wherein at least the resilient limb (16) of the first valve body (13) is elastically deformed in the closed position.

6. Method for producing a valve (100) according to any of the preceding claims, comprising the steps:
- fixing a first valve body (13) to the plunger (4), wherein the first valve body (13) is designed for closing and opening up a valve opening (12) of the valve (100),
- inserting the plunger (4) in a housing (1) of the valve,
- moving the plunger (4) along the longitudinal axis (11) into the closed position such that the first valve body (13) bears against a valve seat (9) so as to close the valve opening (12), and
- fixing a second valve body (14) to the plunger (4) after the movement of the plunger (4) into the closed position, such that the second valve body (14) bears against the valve seat (9).

7. Method according to Claim 6, wherein, in the step of moving, a force is applied to the plunger (4), which force pushes the first valve body (13) against the valve seat (9).

8. Method according to Claim 7, wherein, in the closed position, the first valve body (13) bears with a resilient limb (16) sealingly against the valve seat (9), and wherein a force is applied to the first valve body (13) such that the resilient limb (16) is elastically deformed.

## Revendications

1. Vanne (100) servant à ouvrir et à fermer des conduits de fumées, comprenant
- un boîtier (1),
- un poussoir (4) disposé dans le boîtier (1), lequel peut être couplé à un mécanisme d'entraînement (2) et est configuré pour être déplacé, au moyen du mécanisme d'entraînement (2), le long d'un axe longitudinal (11) du poussoir (4),
- un siège de vanne (9) disposé dans le boîtier (1), lequel délimite une ouverture de vanne (12) et
- un premier corps de vanne (13) et un deuxième corps de vanne (14), lesquels sont respectivement reliés au poussoir (4) de sorte que les deux corps de vanne (13, 14) peuvent être positionnés par un mouvement du poussoir (4) entre une position ouverte, dans laquelle l'ouverture de vanne (12) est libérée, et une position fermée, dans laquelle les deux corps de vanne (13, 14) reposent contre le siège de vanne (9) et ferment respectivement de manière étanche l'ouverture de vanne (12),
les deux corps de vanne (13, 14) étant configurés de manière circonférentielle annulaire autour de l'axe longitudinal (11) du poussoir (4) et possédant respectivement une portion cylindrique (15) au moyen de laquelle ceux-ci sont enfichés et/ou pressés sur le poussoir (4),
le deuxième corps de vanne (14) possédant une branche saillante (17), qui s'étend circonférentiellement de manière annulaire autour de l'axe longitudinal (11) et qui s'étend selon un angle donné par rapport à l'axe longitudinal (11) vers le siège de vanne (9),
les deux corps de vanne (13, 14) étant disposés à côté l'un de l'autre,
le premier corps de vanne (13) étant, en référence à l'axe longitudinal (11), disposé plus proche du siège de vanne (9) que le deuxième corps de vanne (14),
le deuxième corps de vanne (14) possédant une deuxième zone de contact (21) qui est formée au niveau de la branche (17) du deuxième corps de vanne (14) et qui, dans la position fermée, repose contre le siège de vanne (9) pour former une deuxième garniture d'étanchéité (23), de sorte que l'ouverture de vanne (12), dans la position fermée, puisse être rendue étanche à la fois par le premier corps de vanne (13) et par le deuxième corps de vanne (14), **caractérisée en ce que** le premier corps de vanne (13) possède une branche saillante (16), qui s'étend circonférentiellement de manière annulaire autour de l'axe longitudinal (11) et qui s'étend selon un angle donné par rapport à l'axe longitudinal (11) à l'écart du siège de vanne (9) et le premier corps de vanne (13) possède une première zone de contact (18), qui est formée au niveau de la branche (16) du premier corps de vanne (13) et qui, dans la position fermée, repose contre le siège de vanne (9) pour former une première garniture d'étanchéité (20), **en ce que** le deuxième corps de vanne (14) s'étend au moins partiellement au-delà du premier corps de vanne (13) avec sa branche saillante (17) et
**en ce que** les deux branches (16, 17) sont de configuration élastique.

2. Vanne (100) selon la revendication 1, un ou les deux corps de vanne (13, 14) étant réalisés en forme de disque.

3. Vanne (100) selon la revendication 1 ou 2, le premier corps de vanne (13) et/ou le deuxième corps de vanne (14) étant soudés avec le poussoir (4).

4. Vanne (100) selon l'une des revendications précédentes, le premier corps de vanne (13) et/ou le deuxième corps de vanne (14) étant estampés en tant que demi-produit puis étant façonnés dans leur forme définitive.

5. Vanne (100) selon l'une des revendications précédentes, le premier corps de vanne (13) étant, en référence au poussoir (4), disposé plus proche du siège de vanne (9) que le deuxième corps de vanne (14) et au moins la branche (16) élastique du premier corps de vanne (13) étant déformée élastiquement dans la position fermée.

6. Procédé de fabrication d'une vanne (100) selon l'une des revendications précédentes, comprenant les étapes suivantes :
- calage d'un premier corps de vanne (13) au niveau du poussoir (4), le premier corps de vanne (13) étant configuré pour fermer ou pour libérer une ouverture de vanne (12) de la vanne (100),
- insertion du poussoir (4) dans un boîtier (1) de la vanne,
- déplacement du poussoir (4) le long de l'axe longitudinal (11) dans la position fermée de telle sorte que le premier corps de vanne (13) repose contre un siège de vanne (9) en vue de fermer l'ouverture de vanne (12) et
- calage d'un deuxième corps de vanne (14) au niveau du poussoir (4) après avoir déplacé le poussoir (4) dans la position fermée, de sorte que le deuxième corps de vanne (14) repose contre le siège de vanne (9).

7. Procédé selon la revendication 6, une force étant appliquée sur le poussoir (4) à l'étape de déplacement, laquelle pousse le premier corps de vanne (13) contre le siège de vanne (9).

8. Procédé selon la revendication 7, le premier corps de vanne (13), dans la position fermée, reposant de manière étanche contre le siège de vanne (9) avec une branche (16) élastique et une force étant appliquée sur le premier corps de vanne (13) de telle sorte que la branche (16) élastique est déformée élastiquement.
